# EUROPÄISCHE PATENTSCHRIFT

(11) **EP 1 955 605 B1**
(45) Veröffentlichungstag und Bekanntmachung des Hinweises auf die Patenterteilung: **03.08.2011**
(21) Anmeldenummer: 08001898.9
(22) Anmeldetag: 01.02.2008
(51) Int. Cl.: A41D 27/24

(54) **Nahtanordnung sowie diese Nahtanordnung aufweisende Bekleidung**
Seam arrangement and garment comprising said seam arrangement
Couture et vêtement avec cette couture

(30) Priorität: 08.02.2007 DE 202007002108 U
(43) Veröffentlichungstag der Anmeldung: 13.08.2008
(73) Patentinhaber: POLO EXPRESSVERSAND Gesellschaft für Motorradbekleidung und Sportswear mbH, 41363 Jüchen (DE)
(72) Erfinder: Benten, Astrid, 40699 Erkrath (DE)
(74) Vertreter: Kluin, Jörg-Eden

(56) Entgegenhaltungen:
- EP-A- 1 491 105
- WO-A-2004/091902
- WO-A-2005/037543
- DE-C1- 10 158 016
- GB-A- 2 345 031
- GB-A- 2 357 235
- JP-A- 2002 161 411
- ANONYMOUS: "Seam Seal International" INTERNET ARTICLE, [Online] 13. September 2005 (2005-09-13), XP002477532 Gefunden im Internet: URL:http://web.archive.org/web/20050913073 659/http://www.seam-seal.com/seamtapes.htm l> [gefunden am 2008-04-18] & [Online] 19. April 2005 (2005-04-19), Gefunden im Internet: URL:http://web.archive.org/web/20050419212 838/http://www.seam-seal.com/m-statement.h tml> [gefunden am 2008-04-18] & [Online] 8. September 2005 (2005-09-08), Gefunden im Internet: URL:http://web.archive.org/web/20050908034 920/http://www.seam-seal.com/m-intro.html> [gefunden am 2008-04-18] & [Online] 18. April 2005 (2005-04-18), Gefunden im Internet: URL:http://web.archive.org/web/20050419212 704/http://www.seam-seal.com/m-production- procedures.html> [gefunden am 2008-04-19]
- SCRIVANO, SANDY: "Sewing with Leather & Suede" [Online] 2001, LARK BOOKS , XP002477533 ISBN: 1579902731 * Seite 66 *

## Beschreibung

Die Erfindung betrifft eine Nahtanordnung zur Verbindung von Flächengebilden, mit einer die zu verbindenden Flächengebilde durchsetzenden ersten Naht, die durch eine Nahtzugabe eines in einer Falte um eine innere Naht gelegten Flächengebildes überdeckt ist, und mit einer äußeren Naht, die seitlich versetzt zu der inneren Naht angeordnet ist und sämtliche Lagen der Flächengebilde und der Nahtzugabe durchsetzt.

Bei den Flächengebilden handelt es sich insbesondere um Materialien, die bei der Herstellung von Kleidungsstücken, Taschen, Säcken und ähnlichem Verwendung finden. Beispielhaft seien Textilien, Leder, Folien und Laminate genannt.

Derartige Nahtanordnungen werden auch als "Sicherheitsnaht" nach DIN ISO 4916 bezeichnet. Sie finden insbesondere dort Verwendung, wo die Gefahr besteht, dass die Nahtanordnung starker, mechanischer Beanspruchungen, insbesondere auch Reibbeanspruchungen von außen, ausgesetzt werden. Denn im Falle einer derartigen, äußeren Reibbeanspruchung wird zunächst die äußere, sämtliche Lagen der Flächengebilde und die Nahtzugabe durchsetzende Naht mechanisch beansprucht. Sollte diese durchgescheuert sein, so führt dies noch nicht zu einer Zerstörung der Nahtverbindung, da die innere, von der in einer Falte zur Nahtzugabe umgelegten Lage des äußeren Flächengebildes so lange vor dem Einfluss der äußeren Reibbeanspruchung geschützt ist, bis auch dieses durchgescheuert und somit die Trennung der Nahtanmeldung hervorgerufen ist.

Derartige Nahtanordnungen nach DIN ISO 4916 finden daher auch bei der Herstellung von Schutzbekleidung für Zweiradfahrer insbesondere in den Bereichen der Schutzbekleidung Verwendung, bei denen die Gefahr besteht, dass sie bei einem Sturz mit dem Untergrund in Berührung kommen.

Zwar hat sich der Einsatz dieser Sicherheitsnähte vielfach bewährt, es hat sich jedoch gezeigt, dass zur Verlängerung der Lebensdauer der mit diesen Sicherheitsnähten versehenen Produkte bei besonders hohen Beanspruchungen das Bedürfnis nach noch dauerhafteren Nahtanordnungen besteht.

Aus der JP 2002 161411 A ist eine Air-Bag-Weste zum Schutz von Personen vor Verletzungen durch Kollision mit Fahrzeugen bekannt. Die Air-Bags umfassen eine Mehrzahl von Flächengebilden, die über Nähte miteinander verbunden sind. Diese Nähte umfassen eine innere Naht, die durch Nahtzugabe einer in einer Falte um die innere Naht gelegten Flächengebildes überdeckt ist, und eine äußere Naht, die seit-Ilch versetzt zu der inneren Naht angeordnet ist und sämtliche Lagen der Flächengebilde durchsetzt. Es sind sowohl die innere, als auch die äußere Naht beidseitig abdeckende Abdeckstreifen vorgesehen.

Der Erfindung liegt daher die Aufgabe zugrunde, eine Nahtanordnung zu schaffen, die eine gegen mechanische, äußere Einflüsse noch widerstandsfähigere Verbindung von Flächengebildeten ermöglicht, wobei die Nahtanordnung ein besonders grates, optisches Erscheinungs bild aufweist.

Diese Aufgabe wird durch die in Anspruch 1 wiedergegebene Nahtanordnung gelöst.

Dadurch, dass ein sowohl die innere, als auch die äußere Naht überdeckender Abdeckstreifen vorgesehen ist, wird einerseits die mit der Nahtanordnung zwischen den verbundenen Flächengebilden erzielte Zugfestigkeit erhöht, da Zugbelastungen über eine gegenüber dem Stand der Technik erhöhte Anzahl von Nähten übertragen werden und somit die spezifischen Belastungen sowohl der Nähte, als auch der Flächengebilde im Bereich der Nähte reduziert wird. Darüber hinaus verhindert der Abdeckstreifen, dass eine Reibbeanspruchung sogleich auf die äußere Naht einwirkt. Vielmehr bleibt diese so lange von der Reibeinwirkung unbelastet, bis der Abdeckstreifen abgetrennt worden ist. Der Abdeckstreifen ist mit den Flächengebilden vernäht, da dies der Nahtanordnung ein besonders gutes, optisches Erscheinungsbild verleihen kann.

Zur Erhöhung der Belastbarkeit der erfindungsgemäßen Nahtanordnung ist es besonders von Vorteil, wenn der Abdeckstreifen aus einem abriebfesten Material besteht.

Insbesondere bei Bekleidung ist es aufgrund der Flexibilität, der Abriebfestigkeit und des äußeren Erscheinungsbildes besonders bevorzugt, den Abdeckstreifen aus Leder zu fertigen.

Die Erfindung umfasst auch Bekleidung für Personen mit einer erfindungsgemäßen Nahtanordnung, beispielsweise Schutzkleidung für Motorradfahrer.

Die Erfindung soll nun anhand der beigefügten Zeichnung weiter erläutert werden, in denen schematisch
- Fig. 1: eine herkömmliche Nahtanordnung nach ISO 4916 und
- Fig. 2: eine erfindungsgemäße Nahtanordnung mit Abdeckstreifen

in einer perspektivischen Ansicht zeigen.

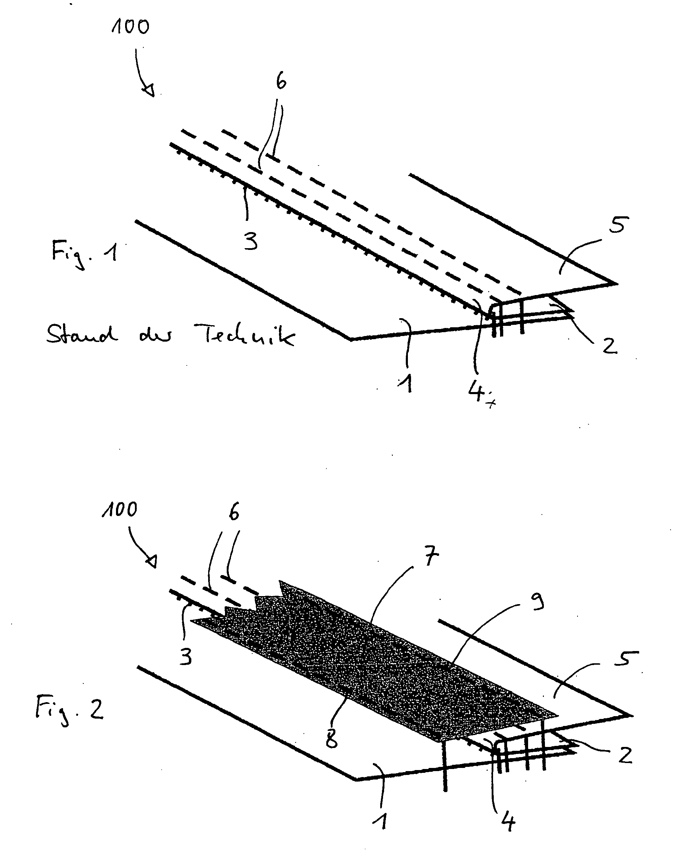

Die in Fig. 1 dargestellte Nahtanordnung 100 aus dem Stand der Technik dient der Verbindung eines ersten Flächengebildes 1 mit einem zweiten Flächengebildet 2. Die Flächengebilde können aus beliebigen Materialien bestehen, die miteinander vernäht werden können.

Die Nahtanordnung 100 umfasst eine innere Naht 3, welche jeweils eine Lage der Flächengebildet 1, 5 durchsetzt.

Das Flächengebilde 5 ist in einer Falte 4 um die innere Naht 3 zur Bildung einer Nahtvorlage umgefaltet, so dass die innere Naht 3 gemäß der Zeichnung von oben von dem Flächengebilde 5 überdeckt ist.

Um die Festigkeit der Verbindung der Flächengebilde 1 und 5 zu erhöhen, umfasst die Nahtanordnung 100 eine äußere Naht 6, die als Doppelnaht ausgebildet ist. Die äußere Naht 6 erstreckt sich demgemäß durch die Flächengebilde 1 und 5 sowie durch die dazwischen liegende Nahtzugabe 2 des Flächengebildes 5.

Um die Nahtanordnung 100 insbesondere gegen äußere Reibeinflüsse gemäß der Zeichnung von oben widerstandsfähiger auszubilden, ist - wie in Fig. 2 schematisch dargestellt - bei der erfindungsgemäßen Nahtanordnung ein Abdeckstreifen 7 vorgesehen. Er besteht aus einem besonders abriebfesten Material, beispielsweise aus Leder. Er ist mit zwei Nähten 8, 9 mit den Flächengebilden 1 und 5 vernäht, wobei die Nähte 8 und 9 derart angeordnet sind, dass sich die innere und die äußere Naht 3, 6 zwischen den Nähten 8, 9 befinden.

Aus Fig. 2 wird sinnfällig, dass sich aufgrund des zusätzlichen Abdeckstreifens 7 nicht nur die Zugbelastbarkeit der Nahtanordnung 100 erhöht, sondern auch deren Widerstandsfähigkeit gegen äußere Reibeinwirkungen, da sich letztere erst auf die Haltbarkeit der Nahtanordnung 100 auswirken, wenn der Abdeckstreifen 7 durchgescheuert oder die Nähte 8, 9 zerstört worden sind.

### Bezugszeichenliste:

- 100: Nahtanordnung
- 1: Flächengebilde
- 2: Nahtzugabe
- 3: Erste Naht
- 4: Falte
- 5: Flächengebilde
- 6: Zweite Naht
- 7: Abdeckstreifen
- 8: Naht
- 9: Naht

## Patentansprüche

1. Bekleidung mit einer Nahtanordnung (100) zur Verbindung von Flächengebilden (1, 5),
mit einer die zu verbindenden Flächengebilde (1, 5) durchsetzenden inneren Naht (3), die durch eine Nahtzugabe (2) eines in einer Falte (4) um die innere Naht (3) gelegten Flächengebildes (5) überdeckt ist,
und mit einer äußeren Naht (6), die seitlich versetzt zu der inneren Naht (3) angeordnet ist und sämtliche Lagen der Flächengebilde (1, 5) durchsetzt,
wobei ein sowohl die innere, als auch die äußere Naht (3, 6) überdeckende Abdeckstreifen (7) vorgesehen ist,
**dadurch gekennzeichnet,**
**dass** der Abdeckstreifen (7) mit den Flächengebilden (1, 2) vernäht ist.

2. Bekleidung nach Anspruch 1, **dadurch gekennzeichnet, dass** der Abdeckstreifen (7) aus einem abriebfesten Material besteht.

3. Bekleidung nach Anspruch 2, **dadurch gekennzeichnet, dass** der Abdeckstreifen (7) aus Leder besteht.

4. Bekleidung nach einem der Ansprüche 1 bis 3, **dadurch gekennzeichnet, dass** die Bekleidung Schutzkleidung für Zweiradfahrer ist.

## Claims

1. Garment having a seam arrangement (100) for connecting sheet-like structures (1, 5),
having an inner seam (3), which passes through the sheet-like structures (1, 5) to be connected and which is covered over by a seam-allowance portion (2) of a sheet-like structure (5), which is positioned in a fold (4) around the inner seam (3),
and having an outer seam (6), which is offset laterally in relation to the inner seam (3) and passes through all the layers of the sheet-like structures (1, 5), wherein a covering strip (7) is provided, this covering strip covering over both the inner seam (3) and the outer seam (6),
**characterized**
**in that** the covering strip (7) is sewn to the sheet-like structures (1, 5).

2. Garment according to Claim 1, **characterized in that** the covering strip (7) consists of an abrasion-resistant material.

3. Garment according to Claim 2, **characterized in that** the covering strip (7) consists of leather.

4. Garment according to one of Claims 1 to 3, **characterized in that** the garment constitutes protective clothing for cyclists.

## Revendications

1. Vêtement avec un système de couture (100) pour assembler des structures planes (1, 5),
comprenant une couture interne (3) traversant les structures planes à assembler (1, 5), qui est recouverte par une couture attenante (2) d'une structure plane (5) disposée en pli (4) autour de la couture interne (3),
et comprenant une couture externe (6) qui est disposée de manière décalée par rapport à la couture interne (3) et qui traverse toutes les couches des structures planes (1, 5),
une bande de recouvrement (7) recouvrant à la fois la couture interne et la couture externe (3, 6) étant prévue,
**caractérisé en ce que**
la bande de recouvrement (7) est cousue avec les structures planes (1, 2).

2. Vêtement selon la revendication 1, **caractérisé en ce que** la bande de recouvrement (7) se compose d'un matériau résistant à l'abrasion.

3. Vêtement selon la revendication 2, **caractérisé en ce que** la bande de recouvrement (7) se compose de cuir.

4. Vêtement selon l'une quelconque des revendications 1 à 3, **caractérisé en ce que** le vêtement est un vêtement de protection pour motocyclistes.
